# EUROPEAN PATENT SPECIFICATION

(11) **EP 4 529 123 B1**
(45) Date of publication and mention of the grant of the patent: **30.09.2026**
(21) Application number: 24191011.6
(22) Date of filing: 25.07.2024
(51) Int. Cl.: H04L 47/28

(54) **SYSTEM AND METHOD FOR GENERATING A TIME-SENSITIVE NETWORK SCHEDULE**
SYSTEM UND VERFAHREN ZUR ERZEUGUNG EINES ZEITEMPFINDLICHEN NETZWERKZEITPLANS
SYSTÈME ET PROCÉDÉ DE GÉNÉRATION D'UN PLANNING DE RÉSEAU SENSIBLE AU TEMPS

(30) Priority: 22.09.2023 US 202318472583
(43) Date of publication of application: 26.03.2025
(73) Proprietor: GE Aviation Systems LLC, Grand Rapids, MI 49512 (US)
(72) Inventor: BUSH, Stephen Francis, Grand Rapids, 49512-1934 (US)
(74) Representative: Openshaw & Co.

(56) References cited:
- US-A1- 2016 197 800
- US-A1- 2021 306 910

## Description

### TECHNICAL FIELD

The subject matter described herein relates, in general, to systems and methods for generating a time-sensitive network schedule.

### BACKGROUND

Various types of control systems communicate with and transfer data between different sensors, devices, user interfaces, etc. so as to enable control operations of powered systems. The operations of these powered systems rely on the accurate and timely delivery of data frames between the devices. Failure to deliver data in a timely manner may result in failure of the powered system, and negatively affect the function, performance, and stability of the powered system and other dependent systems.
A prior art data traffic scheduling system and method is disclosed in US 2021/306910A1 wherein systems and methods for scheduling data traffic in a wireless time sensitive network (TSN) is described.

### SUMMARY OF INVENTION

In a first aspect, there is provided a system in accordance with claim 1.

In a second aspect, there is provided a method in accordance with claim 7.

In a third aspect, there is provided a non-transitory computer-readable medium in accordance with claim 14.

### BRIEF DESCRIPTION OF THE DRAWINGS

The accompanying drawings, which are incorporated in and constitute a part of the specification, illustrate various systems, methods, and other embodiments of the disclosure. It will be appreciated that the illustrated element boundaries (e.g., boxes, groups of boxes, or other shapes) in the figures represent one embodiment of the boundaries. In some embodiments, one element may be designed as multiple elements or multiple elements may be designed as one element. In some embodiments, an element shown as an internal component of another element may be implemented as an external component and vice versa. Furthermore, elements may not be drawn to scale.
FIG. 1 illustrates a block diagram of a time-sensitive network (TSN) incorporating a TSN Environmental Condition to Gate Control (EC-GC) Mapper.
FIGS. 2A-2B illustrate a block diagram of a switching node in communication with a TSN gate control list and the TSN EC-GC Mapper.
FIG. 3 is a more detailed block diagram of the TSN EC-GC Mapper.
FIG. 4 is a flowchart illustrating one embodiment of a method associated with TSN scheduling.
FIG. 5 is an example of a TSN scheduling scenario.

### DETAILED DESCRIPTION

Systems, methods, and other embodiments associated with systems and methods for generating a time-sensitive network schedule are disclosed. Some systems can use a time-sensitive network (TSN) to communicate data using standard methods for time synchronization and traffic management, allowing deterministic communication over standard Ethernet networks between end-devices. Some systems including industrial and aerospace applications may use a TSN to communicate data so as to meet the timing requirements. The TSN may include a Centralized Network Configuration (CNC) and a Centralized User Configuration (CUC). The CNC is a centralized component that configures network resources on behalf of TSN applications (users). The CUC is a centralized entity that discovers end stations, retrieves end station capabilities and user requirements, and configures TSN features in end stations. The TSN includes end devices (also known as end nodes) connected over an Ethernet communication bus. The CUC represents the components of the TSN including the end nodes, the switching nodes that connect the end nodes, and the communication bus. The CUC makes requests to the CNC for deterministic communication (TSN flows) based on characteristics of the components of the TSN. The CNC defines the schedule by which the data are transmitted based on the characteristics which include the data capability and the data transmission rate of the components.

However, the characteristics of the components of the TSN may vary under various environmental conditions such that the schedules are no longer optimum for the changing characteristics of the TSN. One of the current methods to address these changes includes the CUC and the CNC relying on an external entity to identify a change in the characteristics of the TSN such as a change in data capability, e.g., data size, and/or a change in data transmission rate by, as an example, monitoring the TSN. In response to a change in the characteristics of the TSN, the CNC in conjunction with the CUC may dynamically update all the schedules for the entire network. This process is error-prone, slow, and may result in a relatively high overhead. As such, these methods are not directly responsive to environmental conditions and require the CNC to generate a new schedule to accommodate any changes, leading to lost data and interruption of the network. Additionally, the computational complexity of computing a TSN schedule in the current methods is NP-complete (nondeterministic polynomial complete), meaning the time to compute the TSN schedule increases in an intractable manner with the size of the TSN.

Accordingly, systems, methods, and other embodiments associated with generating a time-sensitive network schedule that is responsive to environmental conditions are disclosed. In one embodiment, the disclosed approach connects sensors detecting the environmental conditions with gate control mechanisms that control the data flow within the TSN. As such, the disclosed approach causes the gate control and the data flow to adjust in proportion to the sensor data. The disclosed approach includes a TSN Environmental Condition to Gate Control (EC-GC) Mapper connected to the gate control mechanism and the sensor(s). As an example, the TSN EC-GC Mapper may include an algorithm based on a relationship between the sensor data and the schedule, or more specifically, the gate control mechanism. More generally, the TSN EC-GC Mapper may utilize any suitable method to determine or predict the relationship between the environmental conditions and the schedule (and/or gate control mechanism). As an example, an environmental condition may be related to temperature. The TSN EC-GC Mapper may include an algorithm that reduces the data transmission rate by a set value for each degree the temperature drops. In such an example, the TSN EC-GC Mapper may generate a gate control list with the reduced data transmission rate and the gate control mechanism may control the data flow based on the gate control list. As another example, the gate control list may be an extensible (or extended) gate control list that incorporates the functionality of the TSN EC-GC Mapper. In such an example, the gate control list may include algorithms and/or functions based on the relationship between the environment condition and the schedule. The TSN EC-GC Mapper allows a direct connection between the sensor(s) and the gate control mechanism controlling the data flow within the TSN. The TSN EC-GC Mapper also determines and/or predicts a change in capability of the TSN based on the environmental condition and may generate the gate control list based on the impact of the predicted change in capability.

The embodiments disclosed herein present various advantages over conventional technologies that generate time-sensitive network schedules. First, the embodiments adapt the schedule to various environmental conditions in a seamless and efficient manner by adjusting the TSN gate control based on the sensor data. Second, the embodiments eliminate the dependency on the CNC and the CUC. Third, the embodiments can update a gate control list for one or more switching nodes as is necessary, thus eliminating dynamic TSN re-scheduling which may involve the whole TSN and can be costly, time-consuming, high risk, and have a high overhead. As such, the TSN EC-GC Mapper may program a single switching node independent of the other switching nodes. More generally, the TSN EC-GC Mapper may program two or more switching nodes independent of the remaining components in the TSN. Fourth, the embodiments mitigate the effects of the environmental condition on the TSN. As an example, a TSN with a TSN EC-GC Mapper connected to a temperature sensor may control data flow through the gate control mechanism to mitigate thermal effects. Fifth, the embodiments are capable of being responsive and maintaining an optimum data flow in extreme and/or harsh environments. Sixth, the embodiments adapt the schedule to various environmental conditions in a seamless and efficient manner by adjusting the TSN gate control based on determining or predicting the impact of the sensor data on the characteristics and/or capability of the components of the TSN prior to the characteristics and/or capability of the components of the TSN being impacted or changing. Seventh, the embodiments may include an active network that utilizes reflective programming such these embodiments are more responsive to changes in the TSN.

Detailed embodiments are disclosed herein; however, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in the figures, but the embodiments are not limited to the illustrated structure or application.

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details.

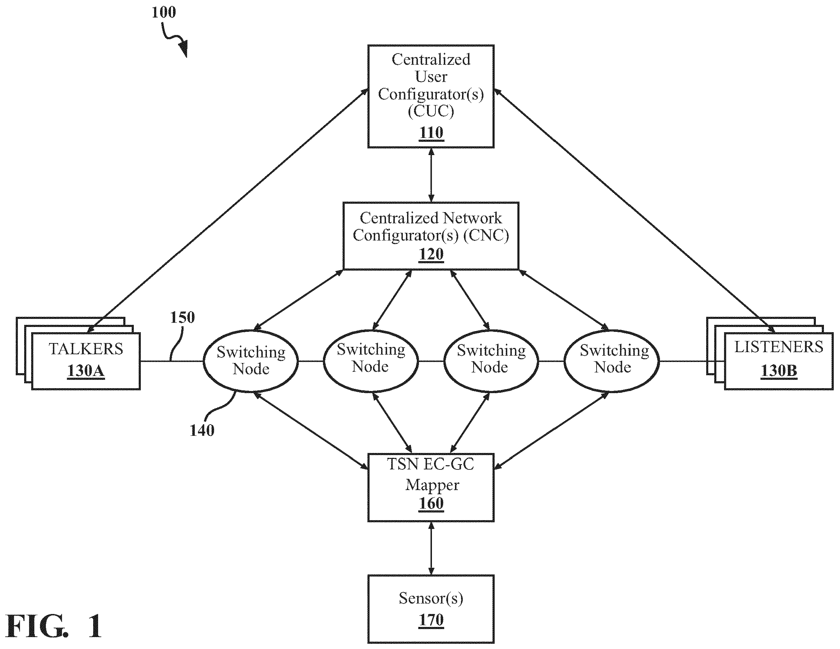

FIG. 1 illustrates a block diagram of a time-sensitive network (TSN) 100 incorporating a TSN EC-GC Mapper 160. The TSN 100 may include various elements, which may be communicatively linked in any suitable form. As an example, the elements may be connected, as shown in FIG. 1. Some of the possible elements of the TSN 100 are shown in FIG. 1 and will now be described. It will be understood that it is not necessary for the TSN 100 to have all the elements shown in FIG. 1 or described herein. The TSN 100 may have any combination of the various elements shown in FIG. 1. Further, the TSN 100 may have additional elements to those shown in FIG. 1. In some arrangements, the TSN 100 may not include one or more of the elements shown in FIG. 1.

The TSN 100 includes a plurality of nodes 130A, 130B (collectively known as 130), 140. The plurality of nodes 130, 140 may include one or more end nodes 130A, 130B and one or more switching nodes 140. While multiple switching nodes 140 are shown in the example of FIG. 1, in certain embodiments, only one switching node 140 may be present. Each end node 130 may be a source of data and/or a destination of data. The end node 130 that is a source of data, sends out data and may be referred to as a talker 130A. As an example, a talker 130A may be a sensor 170. Such a talker 130A may provide sensor data to the TSN EC-GC Mapper 160. The end node 130 that is a destination of data, receives data and may be referred to as a listener 130B. Additionally and/or alternatively, the end node 130 may be capable of sending and receiving data. Such an end node 130 may be capable of being both a talker and a listener. The TSN 100 may include a plurality of end nodes 130 that are talkers 130A, listeners 130B, or both. The end nodes 130 are communicatively linked by one or more switching nodes 140. The switching node 140 receives data from other switching nodes 140 and/or the end nodes 130 capable of sending data such as talkers 130A. The switching node 140 outputs the received data in an order based on a TSN gate control list. The switching node 140 outputs the received data to other switching nodes 140 and/or the end nodes 130 capable of receiving data such as listeners 130B.

As an example and as shown in FIG. 1, the TSN 100 may include the end nodes 130A capable of sending data communicatively linked to the end nodes 130B capable of receiving data through a series of switching nodes 140. In another embodiment, the TSN 100 may include a first end node 130A, a second end node 130B, and a switching node 140 communicatively linked between the first end node 130A and the second end node 130B. In such an embodiment, the first end node 130A may be capable of sending data, the second end node 130B may be capable of receiving data, and the switching node 140 may receive data from the first end node 130A and send the data to the second end node 130B.

The TSN 100 may include one or more Centralized User Configurators (CUC) 110 and one or more Centralized Network Configurators (CNC) 120. The CUC 110 determines characteristics of the components of the TSN 100 that may affect data transmission including data message sizes and data transmission rates. The components of the TSN 100 include the end nodes 130, the switching nodes 140, and the links 150 between the nodes 130, 140. The links 150 may be a communication bus between the end nodes 130, between the switching nodes 140, or between the end nodes 130 and the switching nodes 140. The CUC 110 may determine the characteristics of the components such as transmission capability and/or the transmission requirements of the components. The CUC 110 may determine the characteristics by requesting and retrieving the characteristics from the components.

The CNC 120 determines a status for each of the components. As such, the CNC 120 monitors all the components in the TSN 100 and is capable of detecting changes in the TSN such as the addition or the removal of components. The CNC 120 may identify which components such as the end nodes are responsive to the method of TSN scheduling and/or TSN EC-GC Mapper 160 disclosed in this description. As an example, the CNC 120 may retrieve information about which components support this method of TSN scheduling using a Link Layer Discovery Protocol (LLDP). In such an example, the CNC 120 may further discover, using LLDP, which components such as switching nodes 140 include gates that are extensible as well as upper and lower limits of the dynamic control associated with the extensible gates. An extensible gate may be dynamically controlled and updated by a TSN EC-GC Mapper 160. The CUC 110 and the CNC 120 can generate an initial schedule for data transmission and generate the initial TSN gate control list(s) for the switching nodes 140. The CUC 110 and the CNC 120 generate the initial schedule(s) based on the characteristics and/or the status of the components of the TSN 100. The CUC 110 and the CNC 120 may generate the initial schedule(s) based on whether there are components of the TSN that support the method of TSN scheduling and/or TSN EC-GC Mapper 160 disclosed in this description.

The TSN 100 includes one or more TSN EC-GC Mappers 160. The TSN EC-GC Mapper 160 generates a schedule for data transmission for the switching nodes 140. The TSN EC-GC Mapper 160 receives one or more environmental conditions from one or more sensors 170. The TSN EC-GC Mapper 160 then predicts the schedule(s) based on at least one of the environmental conditions. In one embodiment, the TSN EC-GC Mapper 160 may receive the initial schedule(s) generated by the CUC 110 and the CNC 120 and may then generate an updated schedule that is based on the environmental conditions. In another embodiment, the TSN EC-GC Mapper 160 may generate the initial schedule(s) and the subsequent schedule(s) without input from the CUC 110 and the CNC 120. As such, in one embodiment, the TSN EC-GC Mapper 160 may work in conjunction with the CUC 110 and the CNC 120, and in another embodiment the TSN EC-GC Mapper 160 may work independent from the CUC 110 and the CNC 120.

The sensors 170 may be monitoring the environment surrounding the components of the TSN 100. As an example, the environmental conditions may include temperature, air pressure, vibration, electromagnetic field (such as a radiofrequency electromagnetic field), time, and/or humidity. In such an example, the sensors 170 may include one or more thermometers for measuring temperature, one or more barometers for measuring air pressure, one or more accelerometers for measuring vibration, one or more electric field (E-field) and/or magnetic field (H-field) sensors for measuring electromagnetic fields, one or more oscillators or clocks for measuring time, and/or one or more hygrometers for measuring humidity. As such, the sensors 170 may measure the temperature, air pressure, vibration, electromagnetic field, time and/or humidity proximate to the components.

Alternatively and/or additionally, the sensors 170 may monitor the characteristics of a system that is relying on data transmission using the TSN 100. As an example, the characteristics may include a plasma sheath formation on the system, a location of the system, a vibration of the system, an electromagnetic field around the system, passage of time relative to the system, and/or a function of the system. In such an example, the sensors 170 may include any suitable probe(s) such as a ball-pen probe or a Langmuir probe for measuring the plasma sheath formation on the system, global positioning system(s) for determining the location of the system, one or more accelerometers for measuring the vibration of the system, one or more E-field and/or H-field sensors for measuring electromagnetic fields, one or more oscillators or clocks for measuring time, and/or status monitor(s) for determining the function and/or the risk associated with the system. The TSN EC-GC Mapper 160 is capable of generating a new schedule in response to a change in the environmental conditions and/or the characteristics of the system.

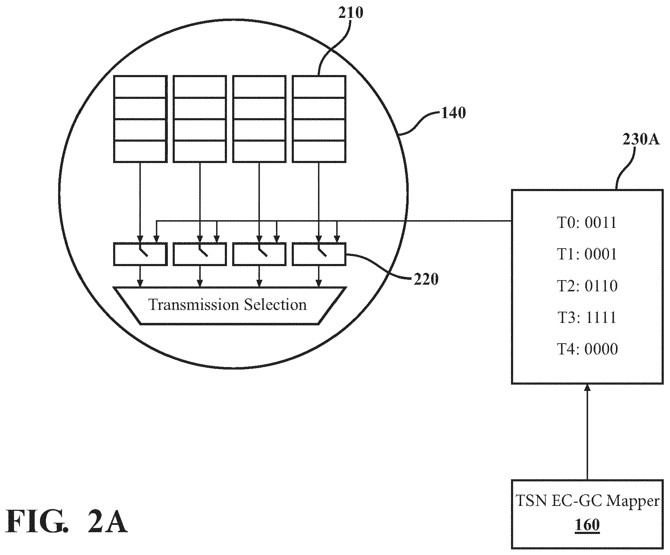

FIGS. 2A-2B illustrate a block diagram of a switching node 140 in communication with a TSN gate control list 230A, 230B (collectively known as 230) and the TSN EC-GC Mapper 160. The switching node 140 includes a plurality of queues 210. In one embodiment, each queue 210 is connected to a different end node 130, more specifically, a different talker 130A. In another embodiment, two or more queues 210 may be connected to one end node 130 or talker 130A. The queue 210 receives and stores data from the associated end node 130. Each queue 210 is connected to a gate 220, as shown. The switching node 140 determines which data to transmit based on a TSN gate control list 230.

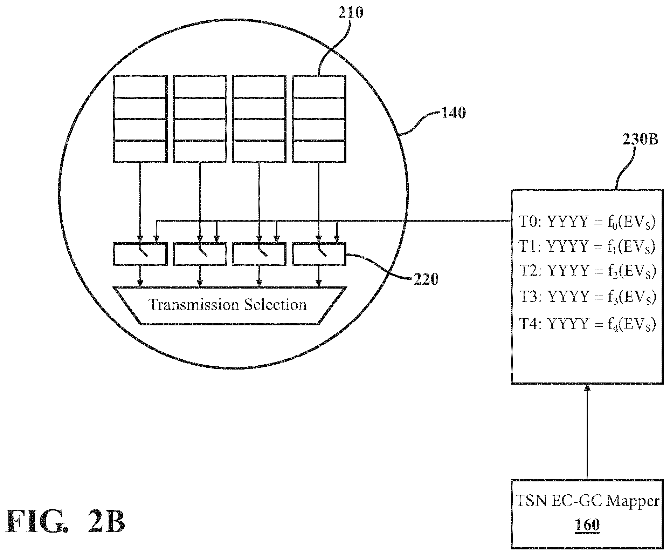

As an example and as shown in FIGS. 2A and 2B, the TSN gate control list 230 may include time segments T0-T4 and a status for each gate at each time segment. The status for a gate 220 may be 0 to indicate that the gate 220 is open and data is not being transmitted through the gate 220. The status for a gate 220 may be 1 to indicate that the gate 220 is closed and data is being transmitted through the gate 220. The switching node 140 may open and close the gates 220 according to the time segments disclosed in the TSN gate control list 230, cycling from time segment T0 to time segment T4 and back to time segment T0. As such, the switching node 140 may transmit data according to the TSN gate control list 230, repeating from T0 to T4.

As shown in FIG. 2A, the TSN EC-GC Mapper 160 may receive the environmental conditions from the sensors 170 and determine a TSN schedule for the switching node 140 based on the environmental conditions using any suitable mapping method. The TSN EC-GC Mapper 160 may then output the status settings in terms of 0s and 1s to indicate the gates being open and closed respectively to the TSN gate control list 230A. The TSN gate control list 230A may then control the switching node with the status settings.

As another example and as shown in FIG. 2B, the TSN EC-GC Mapper 160 may receive the environmental conditions from the sensors 170 and determine a TSN schedule for the switching node 140 based on the environmental conditions using any suitable mapping method. The TSN EC-GC Mapper 160 may then output the status settings as a function to the TSN gate control list 230B. The function (shown as f₀(EVs), where EVs are environment values or measurements from sensor(s) S) may depend on one or more environmental conditions and may also be a function of time. The functions such as f₀(EVs), are processed within the TSN gate control list 230B resulting in the statuses such as YYYY to indicate whether the gates are open or closed. The TSN gate control list 230B may then control the switching node at, as an example, T0 with the result of the function f₀(EVs), YYYY As such, the functionality of the TSN EC-GC Mapper 160 may be incorporated into the TSN gate control list 230B, making the TSN gate control list 230B an extensible and/or extended TSN gate control list.

As previously mentioned, the TSN EC-GC Mapper 160 may generate the TSN gate control list 230 based on environmental conditions received from the sensors 170 and/or characteristics of a user system supported by the TSN 100.

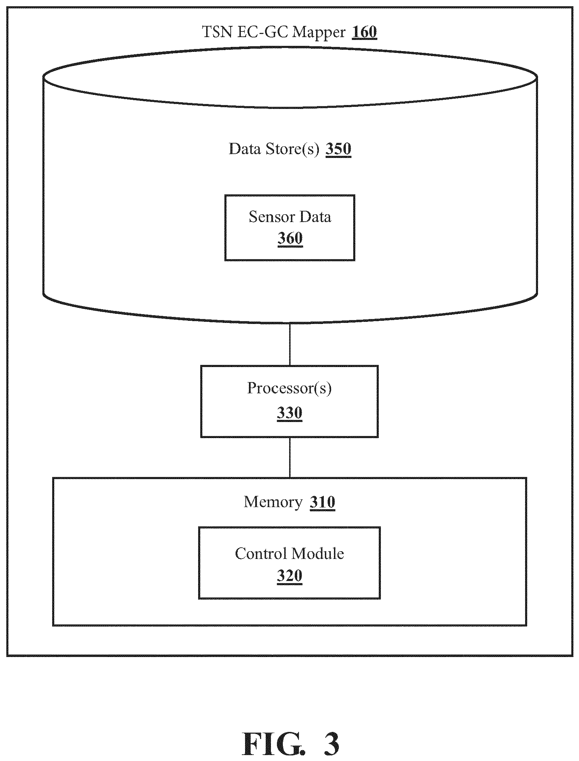

With reference to FIG. 3, a more detailed block diagram of the TSN EC-GC Mapper 160 is illustrated. The TSN EC-GC Mapper 160 is shown as including a processor 330. In one or more embodiments, the processor 330 is an application-specific integrated circuit (ASIC) that is configured to implement functions associated with a control module 320. In general, the processor 330 is an electronic processor, such as a microprocessor, that is capable of performing various functions as described herein. The TSN EC-GC Mapper 160 may access the processor 330 through a data bus or another communication path. In further aspects, the processor 330 is a cloud-based resource that communicates with the TSN EC-GC Mapper 160 through a communication network.

In one embodiment, the TSN EC-GC Mapper 160 includes a memory 310 that stores the control module 320. The memory 310 is a random-access memory (RAM), read-only memory (ROM), a hard-disk drive, a flash memory, or other suitable memory for storing the control module 320. The control module 320 includes, for example, computer-readable instructions within the physical memory 310 that when executed by the processor 330 cause the processor 330 to perform the various functions disclosed herein. In further arrangements, the control module 320 330 is a logic, integrated circuit, or another device for performing the noted functions that includes the instructions integrated therein.

In one embodiment, the TSN EC-GC Mapper 160 includes a data store 350. The data store 350 is, in one embodiment, an electronic data structure (e.g., a database) stored in the memory 310 or another data store 350 and that is configured with routines that may be executed by the processor 330 for analyzing stored data, providing stored data, organizing stored data, and so on. Thus, in one embodiment, the data store 350 stores data used by the control module 320 in executing various functions. In one embodiment, the data store 350 includes sensor data 360 along with other information that is used by the control module 320.

While the TSN EC-GC Mapper 160 is illustrated as including the various data elements, it should be appreciated that one or more of the illustrated data elements may not be included within the data store 350 in various implementations and may be included in a data store 350 that is external to the TSN EC-GC Mapper 160. In any case, the TSN EC-GC Mapper 160 stores various data elements in the data store 350 to support functions of the control module 320.

In one embodiment, the control module 320 includes instructions that, when executed by the processor(s) 330, cause the processor(s) 330 to receive a measured value of at least one environmental condition from at least one sensor 170. One or more components of the TSN 100 may be impacted by the environmental condition. The components may be any element of the TSN 100. As an example, the component may be an end node 130, a switching node 140, or a link 150. As previously mentioned, the environmental condition may be one or more of temperature, air pressure, vibration, electromagnetic field, time, and/or humidity. The component(s) 130, 140, 150 may be impacted by the environmental condition such that a change in temperature, air pressure, vibration, electromagnetic field, time, and/or humidity may cause a change in the data capability and/or the data transmission rate for the component(s) 130, 140, 150. As an example, a drop in temperature in a location proximate to an end node 130 may cause a reduced data transmission rate for the end node 130. As another example, the passage of time may cause a change in the transmission rate for the end node 130. As such, time may be an environmental condition that may impact the component(s) 130, 140, 150. Time may be measured using an oscillator, a clock, or any suitable sensor. More generally, the environmental condition may be any condition or event occurring around the TSN 100 that may have an impact on the component(s) 130, 140, 150 of the TSN 100. In other words, the impact of the measured value of the environmental condition on the component(s) 130 may be a physical impact and/or a functional impact. A physical impact may refer to a change to the physical form of the component(s) 130, 140, 150 such as expansion or contraction of a material of the component(s) 130, 140, 150. A functional impact may refer to a change in the functionality of the component(s) 130, 140, 150 such data rate, data width, and/or data flow. The control module 320 may request and receive the measured value of the environmental conditions from the sensor(s) 170.

In one embodiment, the control module 320 includes instructions that, when executed by the processor(s) 330, cause the processor(s) 330 to determine an impact of the measured value of the at least one environmental condition on at least one component 130, 140, 150 of the TSN 100. The control module 320 may determine or predict the impact of the measured value of the environmental condition using any suitable method. As an example and as explained below, the control module 320 may access a table that includes a relationship between the measured value of the environmental condition(s) and the data capability and/or the data transmission rate for the component(s) 130, 140, 150. The control module 320 may then determine a new schedule based on the data capability and/or the data transmission rate for the component(s) 130, 140, 150.

**In** one embodiment, the control module 320 includes instructions that, when executed by the processor(s) 330, cause the processor(s) 330 to program a switching node 140 based on at least the determined impact. As previously mentioned, the TSN 100 may include a first end node 130A, a second end node 130B, and the switching node 140 which is communicatively linked between the first end node 130A and the second end node 130B. The control module 320 may further include instructions that, when executed by the processor(s) 330, cause the processor(s) 330 to generate a TSN gate control list 230 based on at least the determined impact, and operate the switching node 140 based on the TSN gate control list 230.

The control module 320 may determine a change in the data capability and/or the data transmission rate for a component 130, 140, 150 based on the measured value of the environmental condition(s) using any suitable method. As an example, the control module 320 may access a table that includes a relationship between the measured value of the environmental condition(s) and the data capability and/or the data transmission rate for the component(s) 130, 140, 150. As an example and as shown in Table 1 below, the control module 320 may receive a measured temperature value and may then access the table to retrieve the associated data capability and/or the data transmission rate for the component(s) 130, 140, 150.

**In** this example, the TSN 100 is in a vehicle. The TSN 100 includes two talkers 130A, a listener 130B, and a switch node connecting the talkers 130A to the listener 130B with an IEEE 802.1Qbv schedule. A first talker 130A is a temperature sensor measuring temperature in Kelvin and a second talker 130A is an infrared camera configured to sense heat flow through the vehicle to ensure sufficient heat transfer management. The listener 130B is a fuel recirculation fuel pump rate controller. The first and second talkers 130A share a link from the switch node to the listener 130B.

For simplicity, switching and link delays are not included in the following calculations and the communication network including the link is operating at a fixed rate of 1 Gbps.

The switching node includes four gates - a first gate is connected to the first talker, the temperature sensor and the second gate is connected to the second talker, the infrared camera, the remaining third and fourth gates may be connected to components not currently being discussed.

**Table 1**

| Temperature (K) | Talkers 130A Temperature sensor/ Infrared camera (bps) | Listener 130B (flow rate) | Switching Node 140 |
|---|---|---|---|
| | | | Egress Flow Schedule for Four Gates |
| | | | Gate States and Open Duration (ns) |
| 300K (cool) | 100/ 1000 | Low | 1000 100 [1] |
| | | | 0100 1000 [2] |
| | | | 0000 8900 [3] |
| 350K (nominal) | 200/ 2000 | Medium | 1000 200 |
| | | | 0100 2000 |
| | | | 0000 7800 |
| 400K (anomalous) | 400/ 4000 | High | 1000 400 |
| | | | 0100 4000 |
| | | | 0000 5600 |

The TSN Admin Cycle Time is the time period within which all the gates in the switching node may be allocated flow time. In this example, the TSN Admin Cycle Time is 10,000 ns. As shown in Table 1, when the temperature is 300K (cool), the data rate for the temperature sensor is 100 bps and the data rate for the infrared camera is 1000 bps. As such, the flow rate for the listener 130B is low, and the egress flow schedule for the four gates are set accordingly. In this example and as indicated by [1], the first gate is set to 1 for 100ns and the other gates are set to 0, permitting the first talker 130A, the temperature sensor to transmit data for 100ns and preventing the other connected components from transmitting at that time. Then, as indicated by [2], the second gate is set to 1 for 1000 ns and the other gates are set to 0, permitting the second talker 130A, the infrared camera to transmit data for 1000 ns and preventing the other connected components from transmitting at that time. Then, as indicated by [3], all gates are set to 0, and no data is being transmitted for 8900 ns of the TSN Admin Cycle Time. After 8900 ns expires, the first gate is set to 1 again as indicated by [1], and the cycle repeats. In summary, Table 1 discloses how gate control changes in response to cool, nominal, and warm operating conditions. In this example, warmer temperatures may cause the components to be temperamental, thus requiring additional monitoring and control.

As another example, the egress flow schedule may be expressed as a gate control function. In such an example, the gate control function may be expressed as bitshift(Ob1, round(log10(T))) where T is temperature.

As another example, the control module 320 may utilize one or more artificial intelligence and/or machine learning methods to determine the relationship between the measured value of the environmental condition(s) and the data capability and/or the data transmission rate for the component(s) 130, 140, 150. As such, the artificial intelligence and/or machine learning methods may include regression, classification, clustering, dimensionality reduction, ensemble methods, neural nets and deep learning, transfer learning, reinforcement learning, etc. In the example disclosed above, detailed knowledge of the mechanical architecture and material thermal properties may be utilized to develop an analytical solution resulting in the equation for TSN gate control of the pump flow rate for cooling. The control module 320 may then apply any suitable method to determine and generate an updated TSN gate control list 230 to address the data capability and/or the data transmission rate for the component(s) 130, 140, 150. As an example, the control module 320 may utilize any suitable algorithm or machine learning methods to determine the updated TSN gate control list 230 based on the sensor data and/or the environmental condition. As another example, the control module 320 may access a table that includes a relationship between the measured value of the environmental condition(s) and the TSN gate control list 230 for one or more switching nodes 140. As another example, the control 320 may develop and utilize a mathematical formula based on the relationship between the measured value of the environmental condition(s) and the TSN gate control list 230 for one or more switching nodes 140. The control module 320 may then program the switching node(s) 140 by uploading the updated TSN gate control list 230 and operating the switching node(s) 140 according to the updated TSN gate control list 230. As such, the switching node(s) 140 may output the data based on the updated TSN gate control list 230. As an example, the first end node 130A may be a talker and the second end node 130B may be a listener, and the switching node 140 may receive data from the first end node 130A and output the data to the second end node 130B based on an order and/or rate defined in the updated TSN gate control list 230. More generally and in a case with multiple talkers 130A, listeners 130B, and switching nodes 140, the control module 320 may receive the environmental conditions and determine the impact(s) of the environmental condition(s) on the component(s) 130, 140, 150 of the TSN 100 using, as an example, machine learning methods. The control module 320 may then determine and generate the TSN gate control list(s) 230 based on the impact(s). The control module 320 may then upload the TSN gate control list(s) 230 to the switching node(s) 140. In one example, the control module 320 may determine and generate one TSN gate control list 230 and upload the one TSN gate control list 230 to multiple switching nodes 140. In another example, the control module 320 may determine and generate multiple TSN gate control lists 230 and may upload different TSN gate control lists 230 to different switching nodes 140.

In one embodiment, the control module 320 includes instructions that, when executed by the processor(s) 330, cause the processor(s) 330 to generate an initial TSN gate control list 230 based on a characteristic of one or more of the first end node 130A, the second end node 130B, and the switching node 140 of the TSN 100 and update a TSN gate control list 230 based on at least the initial TSN gate control list 230 and the measured value of the at least one environmental condition. In one example, the CUC 110 and CNC 120 may generate the initial TSN gate control list(s) 230 for the switching node(s) 140. As previously mentioned, the CUC 110 and CNC 120 may generate the initial TSN gate control list(s) 230 based on the characteristics of the TSN 100, particularly the end nodes 130 and switching nodes 140. In another example, the control module 320 may generate the initial TSN gate control list(s) 230 for the switching node(s) 140. The control module 320 may generate the initial TSN gate control list(s) 230 based on the characteristics of the TSN 100 and the components 130, 140, 150 of the TSN 100. Alternatively and/or additionally, the control module 320 may generate the initial TSN gate control list(s) 230 based on the characteristics of the TSN 100, the components 130, 140, 150 of the TSN 100, and/or the measured value(s) of the environmental condition(s).

The control module 320 may then receive sensor data 360 from the sensors 170 indicating an environmental condition or a change in an environmental condition. The control module 320 may further receive the measured value of the environmental condition. The control module 320 then determines the relationship between the environmental condition and the characteristics of the TSN 100, particularly the components 130, 140, 150 of the TSN 100 using any suitable method(s). In other words, the control module 320 may predict the characteristics or a change in the characteristics of the TSN 100 based on the measured value of the environmental condition(s). The control module 320 then generates the updated TSN gate control list(s) 230 based on the initial TSN gate control list(s) 230 and the characteristics of the TSN 100 as predicted based on the relationship. As an example, the control module 320 may maintain portions of the initial TSN gate control list(s) 230 and update other portions of the initial TSN gate control list(s) 230 based on the characteristics of the TSN 100 as predicted. As another example, the control module 320 may replace the initial TSN gate control list(s) 230 with the updated TSN gate control list(s) 230.

In one embodiment, the control module 320 includes instructions that, when executed by the processor(s) 330, cause the processor(s) 330 to program a switching node 140 based on a characteristic of a user system supported by the TSN 100. As previously mentioned, the user system is a system or device that is relying on the TSN 100 for data transmission. The user system may rely on a portion of the TSN 100 or on the whole TSN 100. In some arrangements, the TSN 100 may be located within the user system. In other arrangements, the user system may be one of many systems being supported by the TSN 100. Examples of user systems include vehicles such as hypersonic vehicles or aircraft.

The characteristics of the user system may be related to a condition of the user system, a location of the user system, a function of the user system, and/or a risk associated with the user system. The condition of the system may refer to a physical condition of the system such as whether there is a plasma sheath formation on a surface of the system, the temperature of the system, lighting around the system, weather conditions around the system, a composition of the system (e.g., a system with a malleable surface that becomes a rigid surface), an electromagnetic field around the system, passage of time relative to the system, and/or a vibration of the system. The electromagnetic field around the system may include a radio frequency (RF) electromagnetic field. As such, RF signal characteristics such as signal strength and frequency may be monitored, measured, and recorded. The passage of time may have an impact on the system. As an example, the condition and/or the function of the system may deteriorate with time or may become enhanced with time. As such, the passage of time relative to the system may be monitored, measured, and recorded. The condition of the system may refer to the status of the system such as whether the system is experiencing an emergency or any other relevant risk(s). The location of the system may refer to where the system is physically located on the ground and/or whether the system is airborne. The function of the system refers to the purpose of the system and the tasks the system is performing. The risk may be related to the condition of the system or may be associated with the functions and tasks the system is performing.

The control module 320 may receive the characteristic(s) of the system in any suitable method. As an example, the control module 320 may receive the characteristic(s) from sensors 170 monitoring the user system. As another example, the control module 320 may request information relating to the characteristic(s) of the user system from the user system. The control module 320 may then determine a change in the data capability and/or the data transmission rate for a component based on the characteristic(s) of the user system using any suitable method. In other words, the control module 320 may predict the data capability and/or the data transmission rate for a component based on the characteristic(s) of the user system. As an example, the control module 320 may access a table that includes a relationship between the characteristic(s) of the user system and the data capability and/or the data transmission rate for the component(s). In such an example, the control module 320 may receive information indicating that the system is airborne and may then access the table to retrieve the associated data capability and/or the data transmission rate for the component(s) when the system is airborne. As another example, the control module 320 may utilize a variety of artificial intelligence and/or machine learning methods to determine the relationship between the characteristic(s) of the user system and the data capability and/or the data transmission rate for the component(s). The control module 320 may then apply any suitable method to determine and generate an updated TSN gate control list(s) 230 to address the data capability and/or the data transmission rate for the component(s). As an example and as previously mentioned, the control module 320 may utilize any suitable algorithm or machine learning methods to determine the updated TSN gate control list 230. The control module 320 may then program the switching node 140 by uploading the updated TSN gate control list 230 and operating the switching node 140 according to the updated TSN gate control list 230. As such, the switching node 140 may output the data based on the updated TSN gate control list 230. As an example, the first end node 130A may be a talker and the second end node 130B may be a listener, and the switching node 140 may receive data from the first end node 130A and output the data to the second end node 130B based on an order and/or rate defined in the updated TSN gate control list 230. More generally and in a case with multiple talkers 130A, listeners 130B, and switching nodes 140, the control module 320 may receive the characteristic(s) of the user system and determine the impact(s) of the characteristic(s) of the user system on the component(s) 130, 140, 150 of the TSN 100 using, as an example, machine learning methods. The control module 320 may then determine and generate the TSN gate control list(s) 230 based on the impact(s). The control module 320 may then upload the TSN gate control list(s) 230 to the switching node(s) 140.

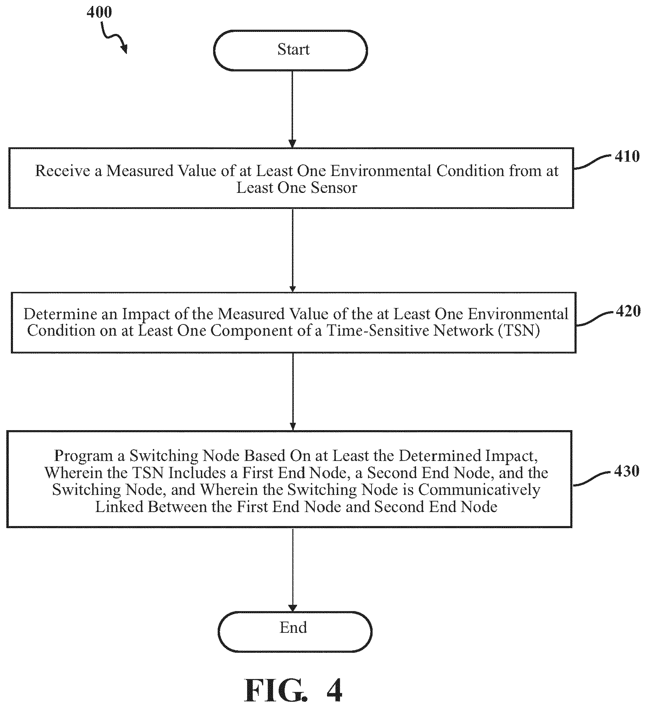

FIG. 4 is a flowchart illustrating one embodiment of a method 400 of associated TSN scheduling. The method 400 will be described from the viewpoint of the TSN EC-GC Mapper 160 of FIGS. 1-3. However, the method 400 may be adapted to be executed in any one of several different situations and not necessarily by the TSN EC-GC Mapper 160 of FIGS. 1-3.

At step 410, the control module 320 may cause the processor(s) 330 to receive a measured value of at least one environmental condition from at least one sensor 170. At least one component of the TSN 100 is impacted by the environmental condition. As previously mentioned, the control module 320 may request and receive sensor data 360 from the sensors 170 and the sensor data 360 may include the measured value such as a temperature value.

At step 420, the control module 320 may cause the processor(s) 330 to predict an impact of the measured value of the at least one environmental condition on at least one component of a time-sensitive network (TSN). The control module 320 may predict an impact of the measured value such as a temperature value on the TSN 100 or more particularly, on the components 130, 140, 150 of the TSN 100. The control module 320 may utilize any suitable method such as lookup tables or machine learning to predict characteristics or change in characteristics of the TSN 100.

At step 430, the control module 320 may cause the processor(s) 330 to program a switching node 140 based on at least the predicted impact. As such, the control module 320 may program the switching node 140 based on at least the measured value of the at least one environmental condition. As previously mentioned, the TSN 100 may include a first end node 130A and a second end node 130B with the switching node 140 communicatively linked between the first end node 130A and the second end node 130B. The control module 320 may then generate a schedule such as a TSN gate control list(s) 230 and may then program the switching node 140 by uploading the schedule to the switching node 140. The schedule may be in any suitable format.

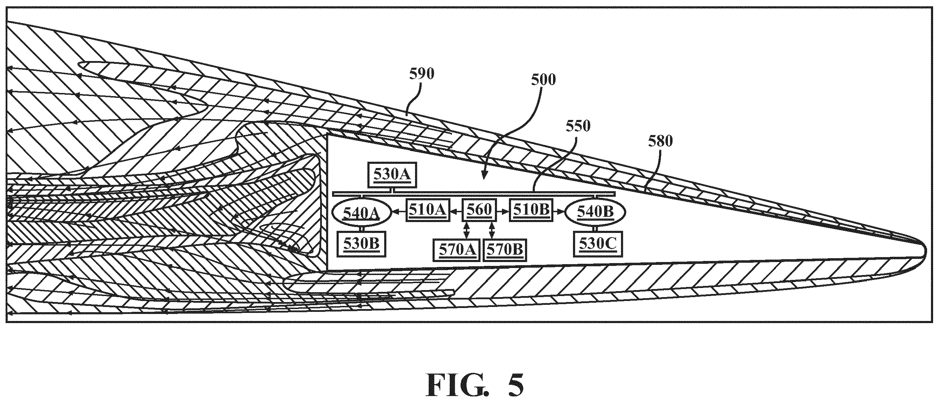

FIG. 5 is an example of a TSN scheduling scenario. FIG. 5 shows a hypersonic vehicle 580 that utilizes a TSN 500, which is similar to the TSN 100 disclosed above. The TSN 500 is located within the hypersonic vehicle 580. A portion of the TSN 500 is shown. In this example, the TSN 500 includes an ethernet communication bus 550, a first end node 530A that is a talker, a second and a third end node 530B, 530C that are listeners, and two switching nodes - a first switching node 540A and a second switching node 540B. The first end node 530A is connected to the ethernet communication bus 550. The first switching node 540A is connected to the ethernet communication bus 550 and to the second end node 530B. The second switching node 540B is connected to the ethernet communication bus 550 and to the third end node 530C.

The TSN 500 includes a TSN EC-GC Mapper 560, and the TSN EC-GC Mapper 560 generates two TSN gate control lists - a first TSN gate control list 510A and a second TSN gate control list 510B. The first TSN gate control list 510A controls the first switching node 540A and the second TSN gate control list 510B controls the second switching node 540B.

The hypersonic vehicle 580 is airborne and has developed a plasma sheath 590. The TSN EC-GC Mapper 560, or more specifically, the control module 320 requests and receives sensor data 360 from a temperature sensor 570A and a plasma sheath sensor 570B. As such, the control module 320 receives a temperature value for the surface of the hypersonic vehicle 580 and also receives values for plasma sheath thickness and capacitance along with any other measurements relevant to the plasma sheath 590.

The TSN EC-GC Mapper 560, or more specifically, the control module 320 determines whether the characteristics of any of the components in the TSN 500 has changed. In this example, the control module 320 may apply machine learning techniques to predict the data capacity and the data transmission rates for the end nodes 530A, 530B, 530C, the switching nodes 540A, 540B, and the ethernet communication bus 550. The control module 320 then generates or updates the two TSN gate control lists 510A, 510B based on the predicted data capacity and data transmission rates. The two TSN gate control lists 510A, 510B may be the same or may be different depending on the associated switching nodes 540A, 540B and end nodes 530B, 530C. The first switching node 540A operates according to the first TSN gate control list 510A, selecting and transmitting data based on the first TSN gate control list 510A. The second switching node 540B operates according to the second TSN gate control list 510B, selecting and transmitting data based on the second TSN gate control list 510B.

Another example of a user system is an aircraft thermal management system (TMS). There are five major elements related to aircraft thermal management systems: 'heat sources', 'heat acquisition' mechanisms, 'thermal transport' means, 'heat rejection' mechanisms, and 'heat sinks.' Active thermal management requires sensors and actuators throughout the aircraft to sense and control the movement of thermal energy (from heat source to heat rejection or terminal heat sinks). The greater the change in thermal entropy, the greater the information entropy (message size and transport time) that is required through the communication network. Heat flow is a change in thermal entropy that must be sensed and transported over a control network in the form of corresponding information entropy. As a further example, a temperature sensor outputs sensor data that affects the rate of operation of a fluid cooling loop via a pump. The greater the heat buildup, the faster the pump is required to operate to maintain a safe target temperature range. A specific example may require details of a mechanical system associated with the TMS and the thermal properties of the materials of the mechanical system.

As previously mentioned, characteristics of the components of the TSN 100 may vary under various environmental conditions such that the static schedules defining data flow and data rates may no longer optimum for the changing characteristics of the TSN. Current method may rely on the CUC and the CNC to update the schedules which may contribute significant delay and/or lag.

The systems and methods disclosed herein bypass the CUC and CNC and directly control switch egress gate control without requiring a complete TSN network rescheduling process. One advantage of these systems and methods includes reducing time and overhead when responding to a change in environmental conditions which include dangerous situations. Another advantage of these systems and methods includes gate control being expressed directly as a mathematical formula such as bitshift(0b1,round(log10(T))), where T is temperature, which may be more amenable to the mechanical and thermal analysis. Other advantages include adapting the schedule to various environmental conditions in a seamless and efficient manner by adjusting the TSN gate control based on the sensor data, eliminating the dependency on the CNC and the CUC, and updating a gate control list for one or more switching nodes as is necessary, thus eliminating dynamic TSN re-scheduling which may involve the whole TSN and can be costly, time-consuming, high risk, and have a high overhead. Other advantages further include programming one or two switching nodes independent of the other switching nodes, mitigating the effects of the environmental condition on the TSN, being responsive and maintaining an optimum data flow in extreme and/or harsh environments, and adapting the schedule to various environmental conditions in a seamless and efficient manner by adjusting the TSN gate control based on determining or predicting the impact of the sensor data on the characteristics and/or capability of the components of the TSN prior to the characteristics and/or capability of the components of the TSN being impacted or changing

Detailed embodiments are disclosed herein. However, it is to be understood that the disclosed embodiments are intended only as examples. Therefore, specific structural and functional details disclosed herein are not to be interpreted as limiting, but merely as a basis for the claims and as a representative basis for teaching one skilled in the art to variously employ the aspects herein in virtually any appropriately detailed structure. Further, the terms and phrases used herein are not intended to be limiting but rather to provide an understandable description of possible implementations. Various embodiments are shown in FIGS. 1-5, but the embodiments are not limited to the illustrated structure or application.

The flowcharts and block diagrams in the figures illustrate the architecture, functionality, and operation of possible implementations of systems, methods, and computer program products according to various embodiments. In this regard, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

The systems, components and/or processes described above can be realized in hardware or a combination of hardware and software and can be realized in a centralized fashion in one processing system or in a distributed fashion where different elements are spread across several interconnected processing systems. Any kind of processing system or another apparatus adapted for carrying out the methods described herein is suited. A typical combination of hardware and software can be a processing system with computer-usable program code that, when being loaded and executed, controls the processing system such that it carries out the methods described herein. The systems, components and/or processes also can be embedded in a computer-readable storage, such as a computer program product or other data programs storage device, readable by a machine, tangibly embodying a program of instructions executable by the machine to perform methods and processes described herein. These elements also can be embedded in an application product which comprises all the features enabling the implementation of the methods described herein and which when loaded in a processing system, is able to carry out these methods.

Furthermore, arrangements described herein may take the form of a computer program product embodied in one or more computer-readable media having computer-readable program code embodied, e.g., stored, thereon. Any combination of one or more computer-readable media may be utilized. The computer-readable medium may be a computer-readable signal medium or a computer-readable storage medium. The phrase "computer-readable storage medium" means a non-transitory storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: a portable computer diskette, a hard disk drive (HDD), a solid-state drive (SSD), a read-only memory (ROM), an erasable programmable read-only memory (EPROM or Flash memory), a portable compact disc read-only memory (CD-ROM), a digital versatile disc (DVD), an optical storage device, a magnetic storage device, or any suitable combination of the foregoing. In the context of this document, a computer-readable storage medium may be any tangible medium that can contain or store a program for use by or in connection with an instruction execution system, apparatus, or device.

Generally, modules, as used herein, include routines, programs, objects, components, data structures, and so on that perform particular tasks or implement particular data types. In further aspects, a memory generally stores the noted modules. The memory associated with a module may be a buffer or cache embedded within a processor, a RAM, a ROM, a flash memory, or another suitable electronic storage medium. In still further aspects, a module as envisioned by the present disclosure is implemented as an application-specific integrated circuit (ASIC), a hardware component of a system on a chip (SoC), as a programmable logic array (PLA), or as another suitable hardware component that is embedded with a defined configuration set (e.g., instructions) for performing the disclosed functions.

Program code embodied on a computer-readable medium may be transmitted using any appropriate medium, including but not limited to wireless, wireline, optical fiber, cable, RF, etc., or any suitable combination of the foregoing. Computer program code for carrying out operations for aspects of the present arrangements may be written in any combination of one or more programming languages, including an object-oriented programming language such as Java^{™}, Smalltalk, C++, or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The terms "a" and "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The phrase "at least one of ... and ...." as used herein refers to and encompasses any and all possible combinations of one or more of the associated listed items. As an example, the phrase "at least one of A, B, and C" includes A only, B only, C only, or any combination thereof (e.g., AB, AC, BC, or ABC).

## Claims

1. A system (160) comprising:
a processor (330); and
a memory (310) storing machine-readable instructions that, when executed by the processor, cause the processor (330) to:
receive a measured value of at least one environmental condition from at least one sensor (170);
determine an impact of the measured value of the at least one environmental condition on at least one component of a time-sensitive network (TSN) (100);
generate a TSN gate control list (230) based on the determined impact; and
program a switching node (140) with the TSN gate control list (230), the TSN including a first end node (130A), a second end node (130B), and the switching node (140), and the switching node (140) being communicatively linked between the first end node (130A) and the second end node (130B).

2. The system (160) of claim 1, wherein the at least one component of the TSN is one of:
an end node (130);
the switching node (140); or
a link (150).

3. The system (160) of any preceding claim, wherein the machine-readable instructions further include instructions that when executed by the processor (330) cause the processor (330) to:
generate an initial TSN gate control list (230) based on a characteristic of one or more of the first end node (130A), the second end node (130B), and the switching node (140) of the TSN (100); and
update a TSN gate control list (230) based on at least the initial TSN gate control list (230) and the determined impact.

4. The system (160) of any preceding claim, wherein the at least one environmental condition is one of:
temperature;
air pressure;
vibration;
electromagnetic field;
time; or
humidity.

5. The system (160) of any preceding claim, wherein the machine-readable instructions further include instructions that when executed by the processor (330) cause the processor (330) to:
program the switching node (140) based on a characteristic of a user system supported by the TSN.

6. The system of claim 5, wherein the characteristic of the user system is based on at least one of:
a plasma sheath formation on the user system;
a location of the user system;
a vibration of the user system;
an electromagnetic field around the user system;
passage of time relative to the user system; or
a function of the user system.

7. A method (400) comprising:
receiving (410) a measured value of at least one environmental condition from at least one sensor (170);
determining (420) an impact of the measured value of the at least one environmental condition on at least one component of a time-sensitive network (TSN) (100);
generating a TSN gate control list (230) based on the determined impact; and
programming (430) a switching node (140) with the TSN gate control list (230), the TSN (100) including a first end node (130A), a second end node (130B), and the switching node (140), and the switching node (140) being communicatively linked between the first end node (130A) and the second end node (130B).

8. The method (400) of claim 7, wherein the at least one component of the TSN (100) is one of:
an end node (130);
the switching node (140); or
a link (150).

9. The method (400) of claim 7 or 8, wherein programming (430) the switching node (140) based on at least the measured value of the at least one environmental condition includes:
generating a TSN gate control list (230) based on at least the determined impact; and
operating the switching node (140) based on the TSN gate control list (230).

10. The method (400) of any of claims 7 to 9, wherein programming (430) the switching node (140) based on at least the measured value of the at least one environmental condition includes:
generating an initial TSN gate control list (230) based on a characteristic of one or more of the first end node (130A), the second end node (130B), and the switching node (140) of the TSN (100); and
updating a TSN gate control list (230) based on at least the initial TSN gate control list (230) and the determined impact.

11. The method (400) of any of claims 7 to 10, wherein the at least one environmental condition is one of:
temperature;
air pressure;
vibration;
electromagnetic field;
time; or
humidity.

12. The method (400) of any of claims 7 to 11, further comprising:
programming the switching node (140) based on a characteristic of a user system supported by the TSN (100).

13. The method (400) of claim 12, wherein the characteristic of the user system is based on at least one of:
a plasma sheath formation on the user system;
a location of the user system;
a vibration of the user system;
an electromagnetic field around the user system;
passage of time relative to the user system; or
a function of the user system.

14. A non-transitory computer-readable medium including instructions that when executed by a processor cause the processor to:
receive a measured value of at least one environmental condition from at least one sensor (170);
determine an impact of the measured value of the at least one environmental condition on at least one component of a time-sensitive network (TSN) (100);
generate a TSN gate control list (230) based on the determined impact; and
program a switching node (140) with the TSN gate control list (230), the TSN (100) including a first end node (130A), a second end node (130B), and the switching node (140), and the switching node (140) being communicatively linked between the first end node (130A) and the second end node (130B).

## Patentansprüche

1. System (160), umfassend:
einen Prozessor (330); und
einen Speicher (310), der maschinenlesbare Anweisungen speichert, die bei Ausführung durch den Prozessor den Prozessor (330) zu Folgendem veranlassen:
Empfangen eines Messwerts mindestens einer Umgebungsbedingung von mindestens einem Sensor (170);
Bestimmen einer Auswirkung des Messwerts der mindestens einen Umgebungsbedingung auf mindestens eine Komponente eines zeitkritischen Netzwerks (TSN) (100);
Erzeugen einer TSN-Gate-Steuerliste (230) auf Grundlage der bestimmten Auswirkung; und
Programmieren eines Vermittlungsknotens (140) mit der TSN-Gate-Steuerliste (230), wobei das TSN einen ersten Endknoten (130A), einen zweiten Endknoten (130B) und den Vermittlungsknoten (140) beinhaltet und der Vermittlungsknoten (140) zwischen dem ersten Endknoten (130A) und dem zweiten Endknoten (130B) kommunikativ verbunden ist.

2. System (160) nach Anspruch 1, wobei die mindestens eine Komponente des TSN eines von Folgendem ist:
ein Endknoten (130);
der Vermittlungsknoten (140); oder
ein Verbindung (150).

3. System (160) nach einem der vorstehenden Ansprüche, wobei die maschinenlesbaren Anweisungen ferner Anweisungen beinhalten, die bei Ausführung durch den Prozessor (330) den Prozessor (330) zu Folgendem veranlassen:
Erzeugen einer anfänglichen TSN-Gate-Steuerliste (230) auf Grundlage einer Eigenschaft eines oder mehrerer von dem ersten Endknoten (130A), dem zweiten Endknoten (130B) und dem Vermittlungsknoten (140) des TSN (100); und
Aktualisieren einer TSN-Gate-Steuerliste (230) auf Grundlage mindestens der anfänglichen TSN-Gate-Steuerliste (230) und der bestimmten Auswirkung.

4. System (160) nach einem der vorstehenden Ansprüche, wobei die mindestens eine Umgebungsbedingung eines von Folgendem ist:
Temperatur;
Luftdruck;
Vibration;
elektromagnetisches Feld;
Zeit; oder
Luftfeuchtigkeit.

5. System (160) nach einem der vorstehenden Ansprüche, wobei die maschinenlesbaren Anweisungen ferner Anweisungen umfassen, die bei Ausführung durch den Prozessor den Prozessor (330) zu Folgendem veranlassen:
Programmieren des Vermittlungsknotens (140) auf Grundlage einer Eigenschaft eines von dem TSN unterstützten Nutzersystems.

6. System nach Anspruch 5, wobei die Eigenschaft des Nutzersystems auf mindestens einem von Folgendem basiert:
einer Plasmarandschichtbildung an dem Nutzersystem;
einem Standort des Nutzersystems;
einer Schwingung des Nutzersystems;
einem elektromagnetischen Feld um das Nutzersystem;
dem Zeitablauf relativ zu dem Nutzersystem; oder
einer Funktion des Nutzersystems.

7. Verfahren (400), umfassend:
Empfangen (410) eines Messwerts mindestens einer Umgebungsbedingung von mindestens einem Sensor (170);
Bestimmen (420) einer Auswirkung des Messwerts der mindestens einen Umgebungsbedingung auf mindestens eine Komponente eines zeitkritischen Netzwerks (TSN) (100);
Erzeugen einer TSN-Gate-Steuerliste (230) auf Grundlage der bestimmten Auswirkung; und
Programmieren eines Vermittlungsknotens (140) mit der TSN-Gate-Steuerliste (230), wobei das TSN einen ersten Endknoten (130A), einen zweiten Endknoten (130B) und den Vermittlungsknoten (140) beinhaltet und der Vermittlungsknoten (140) zwischen dem ersten Endknoten (130A) und dem zweiten Endknoten (130B) kommunikativ verbunden ist.

8. Verfahren (400) nach Anspruch 7, wobei die mindestens eine Komponente des TSN (100) eines von Folgendem ist:
ein Endknoten (130);
der Vermittlungsknoten (140); oder
eine Verbindung (150).

9. Verfahren (400) nach Anspruch 7 oder 8, wobei das Programmieren (430) des Vermittlungsknotens (140) auf Grundlage mindestens des Messwerts der mindestens einen Umgebungsbedingung Folgendes beinhaltet:
Erzeugen einer TSN-Gate-Steuerliste (230) auf Grundlage mindestens der bestimmten Auswirkung;
und
Betreiben des Vermittlungsknotens (140) auf Grundlage der TSN-Gate-Steuerliste (230).

10. Verfahren (400) nach einem der Ansprüche 7 bis 9, wobei das Programmieren (430) des Vermittlungsknotens (140) auf Grundlage mindestens des Messwerts der mindestens einen Umgebungsbedingung Folgendes beinhaltet:
Erzeugen einer anfänglichen TSN-Gate-Steuerliste (230) auf Grundlage einer Eigenschaft eines oder mehrerer von dem ersten Endknoten (130A), dem zweiten Endknoten (130B) und dem Vermittlungsknoten (140) des TSN (100); und
Aktualisieren einer TSN-Gate-Steuerliste (230) auf Grundlage mindestens der anfänglichen TSN-Gate-Steuerliste (230) und der bestimmten Auswirkung.

11. Verfahren (400) nach einem der Ansprüche 7 bis 10, wobei die mindestens eine Umgebungsbedingung eines von Folgendem ist:
Temperatur;
Luftdruck;
Vibration;
elektromagnetisches Feld;
Zeit; oder
Luftfeuchtigkeit.

12. Verfahren (400) nach einem der Ansprüche 7 bis 11, ferner umfassend:
Programmieren des Vermittlungsknotens (140) auf Grundlage einer Eigenschaft eines von dem TSN unterstützten Nutzersystems.

13. Verfahren (400) nach Anspruch 12, wobei die Eigenschaft des Nutzersystems auf mindestens einem von Folgendem basiert:
einer Plasmarandschichtbildung an dem Nutzersystem;
einem Standort des Nutzersystems;
einer Schwingung des Nutzersystems;
einem elektromagnetischen Feld um das Nutzersystem;
dem Zeitablauf relativ zu dem Nutzersystem; oder
einer Funktion des Nutzersystems.

14. Nicht transitorisches, computerlesbares Medium, das Anweisungen beinhaltet, die bei Ausführung durch einen Prozessor den Prozessor zu Folgendem veranlassen:
Empfangen eines Messwerts mindestens einer Umgebungsbedingung von mindestens einem Sensor (170);
Bestimmen einer Auswirkung des Messwerts der mindestens einen Umgebungsbedingung auf mindestens eine Komponente eines zeitkritischen Netzwerks (TSN) (100);
Erzeugen einer TSN-Gate-Steuerliste (230) auf Grundlage der bestimmten Auswirkung; und
Programmieren eines Vermittlungsknotens (140) mit der TSN-Gate-Steuerliste (230), wobei das TSN einen ersten Endknoten (130A), einen zweiten Endknoten (130B) und den Vermittlungsknoten (140) beinhaltet und der Vermittlungsknoten (140) zwischen dem ersten Endknoten (130A) und dem zweiten Endknoten (130B) kommunikativ verbunden ist.

## Revendications

1. Système (160) comprenant :
un processeur (330) ; et
une mémoire (310) stockant des instructions lisibles par machine qui, lorsqu'elles sont exécutées par le processeur, amènent le processeur (330) à :
recevoir une valeur mesurée d'au moins une condition environnementale provenant d'au moins un capteur (170) ;
déterminer un impact de la valeur mesurée de l'au moins une condition environnementale sur au moins un composant d'un réseau sensible au temps (TSN) (100) ;
générer une liste de commande de portes TSN (230) sur la base de l'impact déterminé ; et
programmer un nœud de commutation (140) avec la liste de commande de portes TSN (230), le TSN incluant un premier nœud terminal (130A), un deuxième nœud terminal (130B) et le nœud de commutation (140), et le nœud de commutation (140) étant relié en communication entre le premier nœud terminal (130A) et le deuxième nœud terminal (130B).

2. Système (160) selon la revendication 1, dans lequel l'au moins un composant du TSN est l'un parmi :
un nœud terminal (130) ;
le nœud de commutation (140) ; ou
une liaison (150).

3. Système (160) selon l'une quelconque des revendications précédentes, dans lequel les instructions lisibles par machine comprennent en outre des instructions qui, lorsqu'elles sont exécutées par le processeur (330), amènent le processeur (330) à :
générer une liste initiale de commande de portes TSN (230) sur la base d'une caractéristique d'un ou plusieurs parmi le premier nœud terminal (130A), le deuxième nœud terminal (130B) et le nœud de commutation (140) du TSN (100) ; et
mettre à jour une liste de commande de portes TSN (230) sur la base d'au moins la liste initiale de commande de portes TSN (230) et l'impact déterminé.

4. Système (160) selon l'une quelconque des revendications précédentes, dans lequel l'au moins une condition environnementale est l'une parmi :
une température ;
une pression de l'air ;
une vibration ;
un champ électromagnétique ;
le temps ; ou
une humidité.

5. Système (160) selon l'une quelconque des revendications précédentes, dans lequel les instructions lisibles par machine incluent en outre des instructions qui, lorsqu'elles sont exécutées par le processeur (330), amènent le processeur (330) à :
programmer le nœud de commutation (140) sur la base d'une caractéristique d'un système utilisateur pris en charge par le TSN.

6. Système selon la revendication 5, dans lequel la caractéristique du système utilisateur est basée sur au moins l'un parmi :
une formation d'une gaine de plasma sur le système utilisateur ;
un emplacement du système utilisateur ;
une vibration du système utilisateur ;
un champ électromagnétique autour du système utilisateur ;
un écoulement du temps par rapport au système utilisateur ; ou
une fonction du système utilisateur.

7. Procédé (400) comprenant :
la réception (410) d'une valeur mesurée d'au moins une condition environnementale provenant d'au moins un capteur (170) ;
la détermination (420) d'un impact de la valeur mesurée de l'au moins une condition environnementale sur au moins un composant d'un réseau sensible au temps (TSN) (100) ;
la génération d'une liste de commande de portes TSN (230) sur la base de l'impact déterminé ; et
la programmation (430) d'un nœud de commutation (140) avec la liste de commande de portes TSN (230), le TSN (100) incluant un premier nœud terminal (130A), un deuxième nœud terminal (130B) et le nœud de commutation (140), et le nœud de commutation (140) étant relié en communication entre le premier nœud terminal (130A) et le deuxième nœud terminal (130B).

8. Procédé (400) selon la revendication 7, dans lequel l'au moins un composant du TSN (100) est l'un parmi :
un nœud terminal (130) ;
le nœud de commutation (140) ; ou
une liaison (150).

9. Procédé (400) selon la revendication 7 ou 8, dans lequel la programmation (430) du nœud de commutation (140) sur la base d'au moins la valeur mesurée de l'au moins une condition environnementale inclut :
la génération d'une liste de commande de portes TSN (230) sur la base d'au moins l'impact déterminé ; et
l'exploitation du nœud de commutation (140) sur la base de la liste de commande de portes TSN (230).

10. Procédé (400) selon l'une quelconque des revendications 7 à 9, dans lequel la programmation (430) du nœud de commutation (140) sur la base d'au moins la valeur mesurée de l'au moins une condition environnementale inclut :
la génération d'une liste initiale de commande de portes TSN (230) sur la base d'une caractéristique d'un ou plusieurs parmi le premier nœud terminal (130A), le deuxième nœud terminal (130B) et le nœud de commutation (140) du TSN (100) ; et
la mise à jour d'une liste de commande de portes TSN (230) sur la base d'au moins la liste initiale de commande de portes TSN (230) et l'impact déterminé.

11. Procédé (400) selon l'une quelconque des revendications 7 à 10, dans lequel l'au moins une condition environnementale est l'une parmi :
une température ;
une pression de l'air ;
une vibration ;
un champ électromagnétique ;
le temps ; ou
une humidité.

12. Procédé (400) selon l'une quelconque des revendications 7 à 11, comprenant en outre :
la programmation du nœud de commutation (140) sur la base d'une caractéristique d'un système utilisateur pris en charge par le TSN (100).

13. Procédé (400) selon la revendication 12, dans lequel la caractéristique du système utilisateur est basée sur au moins l'un parmi :
une formation d'une gaine de plasma sur le système utilisateur ;
un emplacement du système utilisateur ;
une vibration du système utilisateur ;
un champ électromagnétique autour du système utilisateur ;
un écoulement du temps par rapport au système utilisateur ; ou
une fonction du système utilisateur.

14. Support non transitoire lisible par ordinateur comprenant des instructions qui, lorsqu'elles sont exécutées par un processeur, amènent le processeur à :
recevoir une valeur mesurée d'au moins une condition environnementale provenant d'au moins un capteur (170) ;
déterminer un impact de la valeur mesurée de l'au moins une condition environnementale sur au moins un composant d'un réseau sensible au temps (TSN) (100) ;
générer une liste de commande de portes TSN (230) sur la base de l'impact déterminé ; et
programmer un nœud de commutation (140) avec la liste de commande de portes TSN (230), le TSN (100) comprenant un premier nœud terminal (130A), un deuxième nœud terminal (130B) et le nœud de commutation (140), et le nœud de commutation (140) étant relié en communication entre le premier nœud terminal (130A) et le deuxième nœud terminal (130B).
